(19) Europäisches Patentamt
European Patent Office
Office européen des brevets

(11) EP 3 495 162 B1

(12) EUROPEAN PATENT SPECIFICATION

(45) Date of publication and mention of the grant of the patent:
**25.02.2026 Bulletin 2026/09**

(21) Application number: **18209463.1**

(22) Date of filing: **30.11.2018**

(51) International Patent Classification (IPC):
***B60C 1/00*** *(2006.01)* ***C08C 1/04*** *(2006.01)*
***C08L 7/00*** *(2006.01)*

(52) Cooperative Patent Classification (CPC):
(C-Sets available)
**C08C 1/04; C08L 7/00;** B60C 2001/0066;
B60C 2009/2064 (Cont.)

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2017 JP 2017236128**

(43) Date of publication of application:
**12.06.2019 Bulletin 2019/24**

(73) Proprietor: **Sumitomo Rubber Industries, Ltd.**
**Kobe-shi, Hyogo-ken 651-0072 (JP)**

(72) Inventor: **KUNISAWA, Tetsuya**
**Kobe-shi Hyogo 651-0072 (JP)**

(74) Representative: **Manitz Finsterwald**
**Patent- und Rechtsanwaltspartnerschaft mbB**
**Martin-Greif-Straße 1**
**80336 München (DE)**

(56) References cited:
**EP-A1- 2 784 115 JP-A- 2017 178 994**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 91/00, C08L 85/00, C08K 3/04, C08K 5/18, C08K 3/06, C08K 3/22, C08K 5/151, C08K 5/47, C08K 5/098**

## Description

BACKGROUND OF THE INVENTION

Field of the Invention

The present invention relates to a pneumatic tire.

Description of the Background Art

To date, fuel economy of automobiles has been improved by rolling resistance of tires being reduced (improvement of rolling resistance properties). In recent years, from the standpoint of concern for environmental issues being raised and from the economic viewpoint, automobiles are more strongly required to exhibit good fuel economy. Therefore, not only a tread which occupies a large proportion of a tire but also members other than the tread are required to exhibit more excellent fuel economy (low heat generation properties), and topping rubber (steel breaker topping rubber) for a steel breaker is also required to exhibit good fuel economy (low heat generation). As a method for improving fuel economy, a method in which an amount of filler such as silica and carbon black is reduced to reduce rolling resistance, thereby improving fuel economy, can be considered. In this case, rubber strength, that is, durability tends to be reduced. Meanwhile, steel breaker topping rubber is also required to exhibit higher steering stability and durability such as fatigue resistance. Therefore, a method for improving fuel economy, steering stability, and durability in a well-balanced manner is required.

To date, for example, a method in which two or more kinds of silicas, and particulate zinc oxide are each blended in a predetermined amount as rubber composition, and a blending ratio between two kinds of silicas is set to be within a predetermined range, to reduce rolling resistance and improve steering stability and the like (for example, see Japanese Laid-Open Patent Publication No. 2008-101127), and a method in which natural rubber and/or modified natural rubber, a resin which exhibits at least two peaks in a molecular weight distribution and in which the heights of the respective peaks satisfy a predetermined relationship, and a white filler are each blended in a predetermined amount, to improve braking performance and reduce rolling resistance (for example, see Japanese Laid-Open Patent Publication No. 2009-7454), have been suggested. Further, JP 2017 178 994 discloses the rubber compositions comprise either natural rubber (100 % by mass) or natural and isoprene rubber (80/20 % by mass), wherein tensile test was made according to JIS K 6251. However, there is still room for improving fuel economy, steering stability, and durability in a well-balanced manner.

SUMMARY OF THE INVENTION

An object of the present invention is to solve aforementioned problem, and provide a pneumatic tire which has steel breaker topping rubber that allows fuel economy, steering stability, and durability to be improved in a well-balanced manner.

The present invention is directed to a pneumatic tire that includes steel breaker topping rubber produced by using a rubber composition, and rubber physical properties of the rubber composition satisfy expression (1) described below after vulcanization of the rubber composition.

$$43000 < EB \times E^*/\tan\delta \quad (1)$$

In expression (1), tanδ represents tanδ obtained by viscoelasticity measurement performed at 70°C, a frequency of 10 Hz, an initial strain of 10%, and a dynamic strain of 2%.

In expression (1), E* represents a dynamic elastic modulus (E* [MPa]) obtained by viscoelasticity measurement performed at 70°C, a frequency of 10 Hz, an initial strain of 10%, and a dynamic strain of 2%.

In expression (1), EB represents a tensile elongation (EB [%]) measured in compliance with JIS K6251,

wherein the rubber composition comprises:

(1) a rubber component,
(2) a cobalt-containing polymer of chemical formula (I), (II) or (III) and
(3) a hydrocarbyl group-containing cyclic polyol compound, and
(4) a reinforcing agent,

wherein the cobalt-containing polymer of chemical formula (I) is

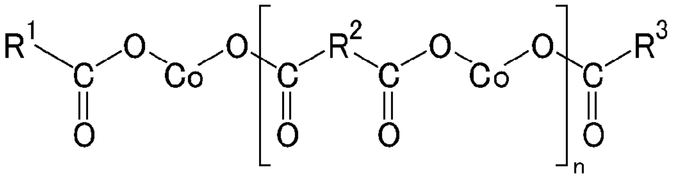

(I)

wherein in chemical formula (I), $R^1$ and $R^3$ are the same or different from each other, and each represent a linear or branched C5 to C36 hydrocarbon group, $R^2$ represents a linear or branched C5 to C36 hydrocarbon group, n represents an integer that is not less than 2,
wherein the cobalt-containing polymer of chemical formula (II) is

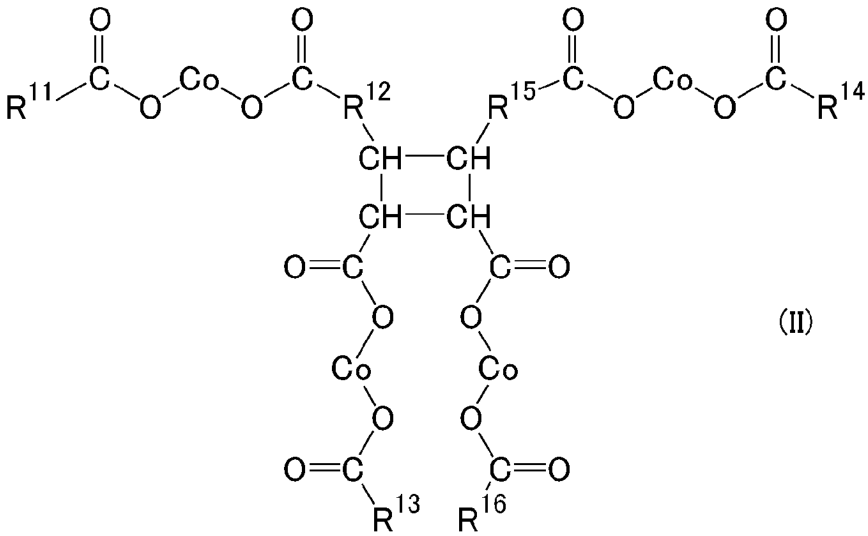

(II)

wherein in chemical formula (II), $R^{11}$, $R^{13}$, $R^{14}$, and $R^{16}$ are the same or different from each other, and each represent a linear or branched C5 to C36 hydrocarbon group, $R^{12}$ and $R^{15}$ are the same or different from each other, and each represent a linear or branched C5 to C36 hydrocarbon group,
wherein the cobalt-containing polymer of chemical formula (III) is

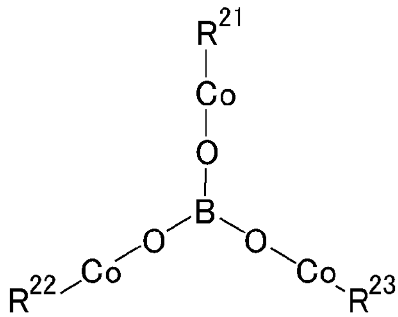

(III)

wherein in chemical formula (III), $R^{21}$, $R^{22}$, and $R^{23}$ are the same or different from each other, and each represent a group represented by chemical formula (IIIa) or a group represented by chemical formula (IIIb),
wherein the cobalt-containing polymer of chemical formula (IIIa) is

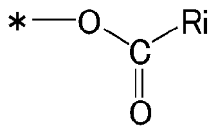

(IIIa)

wherein in chemical formula (IIIa), Ri represents a linear or branched C5 to C36 hydrocarbon group, * represents a binding moiety that binds to a cobalt atom,
wherein the cobalt-containing polymer of chemical formula (IIIb) is

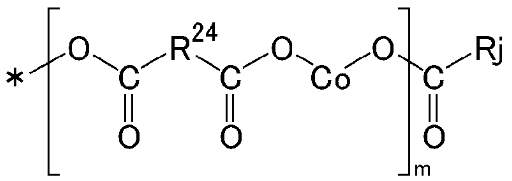

(IIIb)

wherein in chemical formula (IIIb), Rj represents a linear or branched C5 to C36 hydrocarbon group, $R^{24}$ represents a linear or branched C5 to C36 hydrocarbon group, m represents an integer that is not less than 2, * represents a binding moiety that binds to a cobalt atom.

The rubber composition preferably the reinforcing agent is selected from carbon black and/or silica.

A content of the carbon black and/or the silica preferably satisfies expressions (A) and (B) described below.

$$30 < \left(\sum X_j + \sum Z_k\right) < 80 \qquad (A)$$

$$0.2 < \left(\sum \frac{X_j}{Y_j} + \sum \frac{Z_k}{W_k}\right) < 1.2 \qquad (B)$$

In expression (A), Xj represents a content (parts by mass) of carbon black j with respect to 100 parts by mass of a rubber component (j=0, 1, 2, ⋯ m, m represents an integer that is not less than 0), and Zk represents a content (parts by mass) of silica k with respect to 100 parts by mass of the rubber component (k=0, 1, 2, ⋯ n, n represents an integer that is not less than 0).

In expression (B), Xj represents a content (parts by mass) of the carbon black j with respect to 100 parts by mass of the rubber component, and Yj represents a nitrogen adsorption specific surface area ($m^2$/g) of the carbon black j (j=0, 1, 2, ⋯ m, m represents an integer that is not less than 0), Zk represents a content (parts by mass) of the silica k with respect to 100 parts by mass of the rubber component, and Wk represents a nitrogen adsorption specific surface area ($m^2$/g) of the silica k (k=0, 1, 2, ⋯ n, n represents an integer that is not less than 0).

According to the present invention, the pneumatic tire has steel breaker topping rubber produced by using the rubber composition in which rubber physical properties satisfy expression (1) described above after vulcanization, whereby fuel economy, steering stability, and durability can be improved in a well-balanced manner.

DESCRIPTION OF THE PREFERRED EMBODIMENTS

A pneumatic tire of the present invention has steel breaker topping rubber produced by using a rubber composition in which rubber physical properties after vulcanization satisfy expression (1) described below.

$$43000 < EB \times E^*/\tan\delta \qquad (1)$$

In expression (1) described above, tanδ represents tanδ obtained by viscoelasticity measurement performed at 70°C, a frequency of 10 Hz, an initial strain of 10%, and a dynamic strain of 2%.

In expression (1) described above, E*represents a dynamic elastic modulus (E* [MPa]) obtained by viscoelasticity measurement performed at 70°C, a frequency of 10 Hz, an initial strain of 10%, and a dynamic strain of 2%.

In expression (1) described above, EB represents a tensile elongation (EB [%]) measured in compliance with JIS K6251.

The rubber composition comprises: (1) a rubber component, (2) a cobalt-containing polymer of chemical formula (I), (II) or (III) as described below, (3) a hydrocarbyl group-containing cyclic polyol compound, and (4) a reinforcing agent.

In the description herein, the "rubber physical properties after vulcanization" described above represents "rubber physical properties of vulcanized rubber that form the steel breaker topping rubber".

Thus, when the rubber composition having predetermined tanδ, E*, and EB in a vulcanized state is applied to steel breaker topping rubber, a pneumatic tire that allows fuel economy, steering stability, and durability to be improved in a well-balanced manner, can be provided.

As the rubber composition of the present invention, a rubber composition that satisfies expression (1) described below after vulcanization is provided.

$$43000 < EB \times E^*/\tan\delta \qquad (1)$$

In expression (1) described above, tanδ represents tanδ obtained by viscoelasticity measurement performed at 70°C, a frequency of 10 Hz, an initial strain of 10%, and a dynamic strain of 2%, E* represents a dynamic elastic modulus (E* [MPa]) obtained by viscoelasticity measurement performed at 70°C, a frequency of 10 Hz, an initial strain of 10%, and a dynamic strain of 2%, and EB represents a tensile elongation (EB [%]) measured in compliance with JIS K6251.

When tanδ, E*, and EB satisfy expression (1) described above, EB and E* can be increased and tanδ can be reduced. When EB is increased, tensile elongation until breaking can be increased, and durability can be made good in general. When E* is increased, stiffness is enhanced, and steering stability can be made good. When tanδ is reduced, heat generation is reduced, and fuel economy can be made good. As a result, when tanδ, E*, and EB satisfy expression (1) described above, fatigue resistance (durability), rubber elasticity (steering stability), and fuel economy can be made excellent in a well-balanced manner.

The value of expression (1) described above is greater than 43000. The upper limit of the value of expression (1) described above is not particularly defined. The greater the value is, the better the effect is.

In vulcanized rubber composition, a dynamic elastic modulus and tanδ obtained by a predetermined viscoelasticity measurement performed at 70°C, a frequency of 10 Hz, an initial strain of 10%, and a dynamic strain of 2%, and tensile elongation measured in compliance with JIS K6251 can satisfy expression (1) described above by, for example, blending a predetermined rubber component, blending a predetermined reinforcing agent (filler), and blending a predetermined adhesion promotor such as cobalt-containing polymer and hydrocarbyl group-containing cyclic polyol compound as described below. For example, it is important to use predetermined rubber component, cobalt-containing polymer, and hydrocarbyl group-containing cyclic polyol compound in combination.

It is known in general that: the tanδ can be adjusted mainly by changing a kind of a rubber component and a blended amount thereof, and a kind of a reinforcing agent (filler) and a blended amount thereof; the E* can be adjusted mainly by changing a kind of a rubber component and a blended amount thereof, kinds of a reinforcing agent and an adhesion promotor and blended amounts thereof, and a blended amount of a softener; and the EB can be adjusted mainly by changing a kind of a rubber component and a blended amount thereof, kinds of a reinforcing agent and an adhesion promotor and blended amounts thereof, and a blended amount of a softener.

More specifically, for example, when a blended amount of a softener is increased, EB tends to be improved. When a blended amount of a reinforcing agent is increased or a blended amount of softener is reduced, E* tends to be improved. Meanwhile, when a blended amount of a reinforcing agent is reduced, or silica instead of carbon black is used as a reinforcing agent, tanδ tends to be reduced.

The dynamic elastic modulus and tanδ obtained by viscoelasticity measurement performed at 70°C, a frequency of 10 Hz, an initial strain of 10%, and a dynamic strain of 2%, and a tensile elongation measured in compliance with JIS K6251, in the vulcanized rubber composition, can be measured in methods described below in examples.

The rubber composition of the present invention preferably includes, as a rubber component, modified natural rubber that has been highly purified and has a pH adjusted to 2 to 7. Such modified natural rubbers may be each used alone, or two or more of them may be used in combination.

The modified natural rubber is modified natural rubber that has been highly purified, and has a pH adjusted to 2 to 7. The modified natural rubber is modified natural rubber which has been highly purified by non-rubber components such as protein and phospholipid being removed, and is controlled so as to have an appropriate rubber pH value. Therefore, processability, fuel economy, steering stability, and durability are improved. In a case where non-rubber components are removed, and/or rubber becomes basic or strongly acidic, degradation of rubber is likely to progress. However, when the pH of the rubber is adjusted so as to be within a predetermined range, reduction of the molecular weight during storage is inhibited, whereby thermal aging resistance becomes good. As a result, degradation of rubber physical properties in a kneading process step can be prevented, and dispersibility of a filler can be improved, and balance among various performances described above is improved.

In the description herein, when non-rubber components are removed, even if an amount of non-rubber components having been removed is small, the removal is determined to have been performed. All of non-rubber components need not be necessarily removed.

"Highly purifying" means removing impurities such as protein and phospholipid other than natural polyisoprenoid component. Natural rubber has a structure in which isoprenoid component is covered with the impurity components. It is assumed that, when the above-described components are removed, the structure of the isoprenoid component is changed and interaction with blending ingredients is changed to reduce energy loss or improve durability, whereby better rubber composition can be obtained.

The modified natural rubber that has been highly purified and has a pH adjusted to 2 to 7 is not particularly limited

when the modified natural rubber is a modified natural rubber which has been highly purified by an amount of the non-rubber components being reduced, and has a rubber pH of 2 to 7. Specific examples of the modified natural rubber include (a) modified natural rubber which is obtained by non-rubber components in natural rubber being removed, and treatment with acidic compound being thereafter performed, and which has a pH of 2 to 7, (b) modified natural rubber which is obtained by saponified natural rubber latex being washed and treatment with acidic compound being further performed, and which has a pH of 2 to 7, (c) modified natural rubber which is obtained by deproteinized natural rubber latex being washed, and treatment with acidic compound being further performed, and which has a pH of 2 to 7, and (d) modified natural rubber which is obtained by natural rubber latex being aggregated (solidified), and the aggregated (solidified) rubber being pulverized and repeatedly washed with water, and which has a pH of 2 to 7.

Thus, the modified natural rubber can be prepared in, for example, a production method in which saponified natural rubber latex or deproteinized natural rubber latex is washed with water such as distilled water, and further treated with acidic compound. In this case, it is important to shift the pH from the pH of distilled water used for washing toward a pH on the acidic side by treatment with the acidic compound to reduce a pH value. In general, a pH of distilled water is not 7.00, and is about 5 to 6. In this case, it is important to reduce the pH value from 5 to 6 to a value on the acidic side by the treatment with the acidic compound. Specifically, the pH value is preferably reduced, by 0.2 to 2, from a pH value of water used for washing, through the treatment with the acidic compound.

The pH of the modified natural rubber is 2 to 7, preferably 3 to 6, and more preferably 4 to 6. When the pH thereof is adjusted so as to be within the above-described range, reduction of thermal aging resistance can be prevented, and various performances described above can be significantly improved.

The pH of the modified natural rubber is a value which is measured as follows. That is, rubber is cut such that each side is 2 mm or less long, and immersed in distilled water, extraction is performed at 90°C for 15 minutes while the rubber is irradiated with microwaves, and the immersion water is measured by using a pH meter, thereby measuring the pH of the modified natural rubber. Specifically, the pH thereof is measured in a method described below in examples. In the extraction, water-soluble component cannot be completely extracted from the inside of the rubber even if extraction is performed by an ultrasonic washing device or the like for one hour. Therefore, the pH of the inside of the rubber cannot be correctly obtained. However, the substantial properties of the rubber can be known by extraction in this manner.

The modified natural rubber has been highly purified by various methods such as (a) to (d) described above. For example, a phosphorus content of the modified natural rubber is preferably not greater than 500 ppm, more preferably not greater than 400 ppm, even more preferably not greater than 300 ppm, particularly preferably not greater than 200 ppm, and most preferably not greater than 150 ppm. When the phosphorus content is greater than 500 ppm, Mooney viscosity may be increased during storage to deteriorate processability, or tanδ may be increased to prevent fuel economy from being improved.

The phosphorus content can be measured by a conventional method such as ICP emission spectrometry. It is considered that phosphorus is derived from phospholipid contained in the natural rubber.

In a case where the modified natural rubber contains an artificial anti-aging agent, a nitrogen content of the modified natural rubber having been immersed in acetone at room temperature (25°C) for 48 hours, is preferably not greater than 0.30% by mass, more preferably not greater than 0.15% by mass, and even more preferably not greater than 0.10% by mass. When the nitrogen content thereof is greater than 0.30% by mass, Mooney viscosity may be increased during storage to deteriorate processability or an effect of improving fuel economy may not be sufficiently obtained.

Since natural anti-aging agent component which may have been originally contained in natural rubber is removed in the highly-purified natural rubber, the highly-purified natural rubber may be deteriorated due to long-term storage. Therefore, the artificial anti-aging agent may be added. The nitrogen content is a value measured after the artificial anti-aging agent in the rubber has been removed by acetone extraction. The nitrogen content can be measured by a conventional method such as a Kjeldahl method and a method using a trace nitrogen analyzer. Nitrogen is derived from protein or amino acid.

The modified natural rubber that has been highly purified by the above-described (a) to (d), and has a pH adjusted to 2 to 7 can be prepared by, for example, a manufacturing method (production method 1) that includes a step 1-1 of saponifying natural rubber latex, a step 1-2 of washing the saponified natural rubber latex, and a step 1-3 of performing treatment with acidic compound, or a manufacturing method (production method 2) that includes a step 2-1 of deproteinizing natural rubber latex, a step 2-2 of washing the deproteinized natural rubber latex, and a step 2-3 of performing treatment with acidic compound.

The modified natural rubber can be prepared by, for example, the method disclosed in Japanese Laid-Open Patent Publication No. 2010-138359 or Japanese Laid-Open Patent Publication No. 2015-124308.

A content of the modified natural rubber in 100% by mass of the rubber component is preferably not less than 60% by mass, more preferably not less than 70% by mass, even more preferably not less than 80% by mass, particularly preferably not less than 90% by mass, and may be 100% by mass. When the content of the modified natural rubber is within the above-described range, the effects of the present invention can be more advantageously obtained.

A rubber component, other than the modified natural rubber, which can be used in the present invention is not

particularly limited. Examples of the rubber component include diene rubber such as natural rubber (NR) other than the modified natural rubber described above, isoprene rubber (IR), butadiene rubber (BR), styrene-butadiene rubber (SBR), styrene-isoprene-butadiene rubber (SIBR), ethylene-propylene-diene rubber (EPDM), chloroprene rubber (CR), acrylonitrile-butadiene rubber (NBR), isobutylene-isoprene-rubber (IIR), and epoxidized natural rubber (ENR). These diene rubbers may be each used alone, or two or more of them may be used in combination. Furthermore, modified ones may be used.

The rubber composition of the present invention preferably contains cobalt-containing polymer and hydrocarbyl group-containing cyclic polyol compound. When the cobalt-containing polymer and the hydrocarbyl group-containing cyclic polyol compound are blended in addition to the modified natural rubber, the rubber composition that satisfies expression (1) described above can be obtained, and excellent rubber elasticity (steering stability), fuel economy, and durability (fatigue resistance) can be obtained in a well-balanced manner.

The cobalt-containing polymer is a polymer that contains a cobalt atom, and a cobalt content of the polymer is preferably not less than 3% by mass. When the cobalt content of the cobalt-containing polymer is not less than 3% by mass, an effect of using the cobalt-containing polymer in combination with the modified natural rubber and the hydrocarbyl group-containing cyclic polyol compound can be more advantageously obtained, and more excellent rubber elasticity (steering stability), fuel economy, and durability (fatigue resistance) can be obtained in a well-balanced manner. The cobalt content of the cobalt-containing polymer is more preferably not less than 5% by mass, even more preferably not less than 10% by mass, and particularly preferably not less than 12% by mass. The upper limit of the cobalt content is not particularly defined, but, for example, the cobalt content thereof is preferably not greater than 30% by mass, more preferably not greater than 25% by mass, and even more preferably not greater than 20% by mass.

The cobalt content of the cobalt-containing polymer can be measured by using X-ray fluorescence analysis.

A weight-average molecular weight (Mw) of the cobalt-containing polymer is preferably not less than 2000. When the Mw of the cobalt-containing polymer is not less than 2000, an effect of using the cobalt-containing polymer in combination with the modified natural rubber and the hydrocarbyl group-containing cyclic polyol compound can be more advantageously obtained, and more excellent rubber elasticity (steering stability), fuel economy, and durability (fatigue resistance) can be obtained in a well-balanced manner. The Mw of the cobalt-containing polymer is more preferably not less than 2500. The upper limit of the Mw thereof is not particularly defined, but, for example, the Mw of the cobalt-containing polymer is preferably not greater than 10000, more preferably not greater than 7500, and even more preferably not greater than 5000.

The Mw of the cobalt-containing polymer can be obtained by polystyrene standard conversion based on a value measured by gel permeation chromatography (GPC) (GPC-8000 series manufactured by Tosoh Corporation, detector: differential refractometer, column: TSKgel SuperMultipore HZ-M manufactured by Tosoh Corporation).

The cobalt-containing polymer preferably has at least two Co (cobalt)-carboxylate sequences, and more preferably has three or more Co-carboxylate sequences. In another mode, the cobalt-containing polymer also preferably has one or more borate groups. In still another mode, the cobalt-containing polymer also preferably has a residual unsaturated bond. When the cobalt-containing polymer has such a structure, an effect of using the cobalt-containing polymer in combination with the modified natural rubber and the hydrocarbyl group-containing cyclic polyol compound can be more advantageously obtained, and more excellent rubber elasticity (steering stability), fuel economy, and durability (fatigue resistance) can be obtained in a well-balanced manner.

According to the present invention, the cobalt-containing polymer is a compound represented by chemical formula (I), chemical formula (II), or chemical formula (III) described below, and is more preferably a compound represented by chemical formula (I) described below.

[Chemical formula 1]

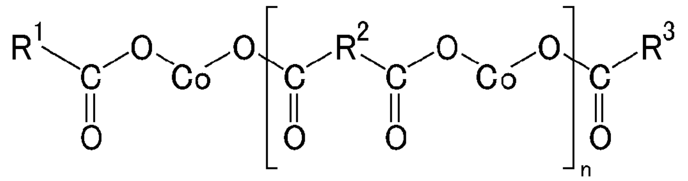

(I)

In chemical formula (I) described above, $R^1$ and $R^3$ are the same or different from each other, and each represent a linear or branched C5 to C36 hydrocarbon group. $R^2$ represents a linear or branched C5 to C36 hydrocarbon group. n represents an integer that is not less than 2.

[Chemical formula 2]

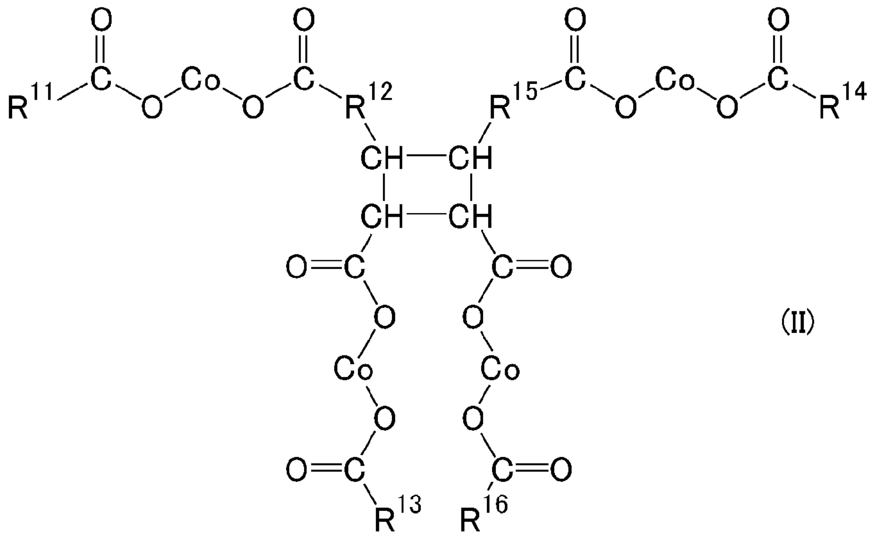

(II)

In chemical formula (II) described above, $R^{11}$, $R^{13}$, $R^{14}$, and $R^{16}$ are the same or different from each other, and each represent a linear or branched C5 to C36 hydrocarbon group. $R^{12}$ and $R^{15}$ are the same or different from each other, and each represent a linear or branched C5 to C36 hydrocarbon group.

[Chemical formula 3]

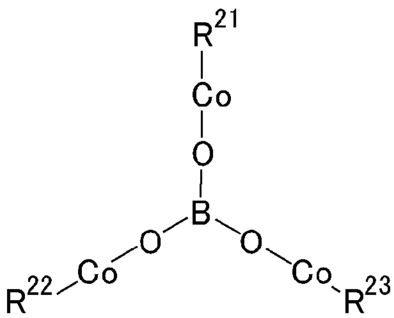

(III)

In chemical formula (III) described above, $R^{21}$, $R^{22}$, and $R^{23}$ are the same or different from each other, and each represent a group represented by chemical formula (IIIa) described below or a group represented by chemical formula (IIIb) described below.

[Chemical formula 4]

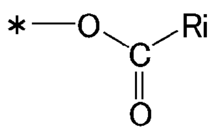

(IIIa)

In chemical formula (IIIa) described above, Ri represents a linear or branched C5 to C36 hydrocarbon group. * represents a binding moiety that binds to a cobalt atom.

[Chemical formula 5]

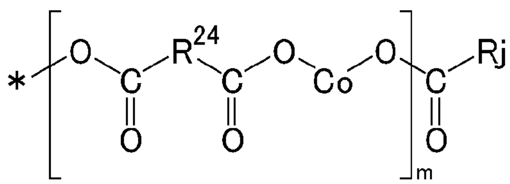

(IIIb)

In chemical formula (IIIb) described above, Rj represents a linear or branched C5 to C36 hydrocarbon group. $R^{24}$ represents a linear or branched C5 to C36 hydrocarbon group. m represents an integer that is not less than 2. * represents a binding moiety that binds to a cobalt atom.

In chemical formula (I), $R^1$ and $R^3$ are the same or different from each other, and each represent a linear or branched C5 to C36 hydrocarbon group. In $R^1$ and $R^3$, the number of carbon atoms in the hydrocarbon group is preferably 6 to 30, more preferably 7 to 25, and even more preferably 8 to 20.

In $R^1$ and $R^3$, examples of the C5 to C36 hydrocarbon group include C5 to C36 alkenyl groups, C5 to C36 alkynyl groups, and C5 to C36 alkyl groups.

Examples of the C5 to C36 alkenyl group include a pentenyl group, an isopentenyl group, a 1-hexenyl group, a 2-hexenyl group, a 1-octenyl group, a decenyl group, an undecenyl group, a dodecenyl group, a tridecenyl group, a tetradecenyl group, a pentadecenyl group, a heptadecenyl group, an octadecenyl group, an icosenyl group, a tricosenyl group, and a hexacosenyl group.

Examples of the C5 to C36 alkynyl group include a pentynyl group, a hexynyl group, a heptynyl group, an octynyl group, a nonynyl group, a decynyl group, an undecynyl group, a dodecynyl group, a tridecynyl group, a tetradecynyl group, a pentadecynyl group, a heptadecynyl group, an octadecynyl group, an icosynyl group, a tricosynyl group, and a hexacosynyl group.

Examples of the C5 to C36 alkyl group include a pentyl group, a 3-methylbutyl group, a 1-methylbutyl group, a 1-ethylpropyl group, a 1,1-dimethylpropyl group, a hexyl group, a heptyl group, a 2-ethylhexyl group, an octyl group, a nonyl group, a decyl group, an undecyl group, a dodecyl group, a tridecyl group, a tetradecyl goup, a pentadecyl group, an octadecyl group, a heptadecyl group, an icosyl group, a tricosyl group, and a hexacosyl group.

In chemical formula (I) described above, $R^2$ represents a linear or branched C5 to C36 hydrocarbon group. In $R^2$, the number of carbon atoms of the hydrocarbon group is preferably 6 to 30, more preferably 7 to 25, and even more preferably 8 to 20.

In $R^2$, examples of the C5 to C36 hydrocarbon group include C5 to C36 alkenylene groups, C5 to C36 alkynylene groups, and C5 to C36 alkylene groups.

Examples of the C5 to C36 alkenylene group include a bivalent group obtained by removing one hydrogen atom from the above-described C5 to C36 alkenyl group.

Examples of the C5 to C36 alkynylene group include a bivalent group obtained by removing one hydrogen atom from the above-described C5 to C36 alkynyl group.

Examples of the C5 to C36 alkylene group includes a bivalent group obtained by removing one hydrogen atom from the above-described C5 to C36 alkyl group.

In chemical formula (I) described above, n represents an integer that is not less than 2, is preferably 4 to 50, is more preferably 6 to 45, and is even more preferably 8 to 40.

In chemical formula (II) described above, $R^{11}$, $R^{13}$, $R^{14}$, and $R^{16}$ are the same or different from each other, and each represent a linear or branched C5 to C36 hydrocarbon group. In $R^{11}$, $R^{13}$, $R^{14}$, and $R^{16}$, the number of carbon atoms of the hydrocarbon group is preferably 6 to 30, more preferably 7 to 25, and even more preferably 8 to 20.

In $R^{11}$, $R^{13}$, $R^{14}$, and $R^{16}$, examples of the C5 to C36 hydrocarbon group include C5 to C36 alkenyl groups, C5 to C36 alkynyl groups, and C5 to C36 alkyl groups.

Examples of each of the C5 to C36 alkenyl group, the C5 to C36 alkynyl group, and the C5 to C36 alkyl group include the same groups as described above for $R^1$ and $R^3$.

In chemical formula (II) described above, $R^{12}$ and $R^{15}$ are the same or different from each other, and each represent a linear or branched C5 to C36 hydrocarbon group. In $R^{12}$ and $R^{15}$, the number of carbon atoms of the hydrocarbon group is preferably 6 to 30, more preferably 7 to 25, and even more preferably 8 to 20.

In $R^{12}$ and $R^{15}$, examples of the C5 to C36 hydrocarbon group include C5 to C36 alkenylene groups, C5 to C36 alkynylene groups, and C5 to C36 alkylene groups.

Examples of each of the C5 to C36 alkenylene group, the C5 to C36 alkynylene group, and the C5 to C36 alkylene group include the same groups as described above for $R^2$.

In chemical formula (IIIa) described above, Ri represents a linear or branched C5 to C36 hydrocarbon group. In Ri, the number of carbon atoms of the hydrocarbon group is preferably 6 to 30, more preferably 7 to 25, and even more preferably 8 to 20.

In Ri, examples of the C5 to C36 hydrocarbon group include C5 to C36 alkenyl groups, C5 to C36 alkynyl group, and C5 to C36 alkyl groups.

Examples of each of the C5 to C36 alkenyl group, the C5 to C36 alkynyl group, and the C5 to C36 alkyl group include the same groups as described above for $R^1$ and $R^3$.

In chemical formula (IIIb), Rj represents a linear or branched C5 to C36 hydrocarbon group. In Rj, the number of carbon atoms of the hydrocarbon group is preferably 6 to 30, more preferably 7 to 25, and even more preferably 8 to 20.

In Rj, examples of the C5 to C36 hydrocarbon group include C5 to C36 alkenyl groups, C5 to C36 alkynyl groups, and C5 to C36 alkyl groups.

Examples of each of the C5 to C36 alkenyl group, the C5 to C36 alkynyl group, and the C5 to C36 alkyl group include the same groups as described above for $R^1$ and $R^3$.

In chemical formula (IIIb) described above, $R^{24}$ represents a linear or branched C5 to C36 hydrocarbon group. In $R^{24}$, the number of carbon atoms of the hydrocarbon group is preferably 6 to 30, more preferably 7 to 25, and even more preferably 8 to 20.

In $R^{24}$, examples of the C5 to C36 hydrocarbon group include C5 to C36 alkenylene groups, C5 to C36 alkynylene groups, and C5 to C36 alkylene groups.

Examples of each of the C5 to C36 alkenylene group, the C5 to C36 alkynylene group, and the C5 to C36 alkylene group include the same groups as described above for $R^2$.

In chemical formula (IIIb) described above, m represents an integer that is not less than 2, is preferably 4 to 50, more preferably 6 to 45, and even more preferably 8 to 40.

The cobalt-containing polymer can be more preferably produced in, for example, a method in which C4 to C36 monocarboxylic acid or a precursor corresponding thereto, C4 to C36 n-basic polycarboxylic acid or a precursor corresponding thereto, and a $Co^{2+}$ source such as cobalt hydroxide, in a range of amounts that satisfy the following expression, are mixed and heated at 100 to 250°C. The cobalt-containing polymer can be produced by using a standard industrial device while agitation is performed as appropriate.

$$1.0<(x+ny)/2z<1.2, \text{ and } 0<x/y<1$$

(wherein x represents the number of moles of the C4 to C36 monocarboxylic acid or a precursor corresponding thereto, y represents the number of moles of the C4 to C36 n-basic polycarboxylic acid or a precursor corresponding thereto, and z represents the number of moles of the $Co^{2+}$ source.)

When a cobalt-containing polymer that contains one or more borate groups is produced, the borate group may be a borate group with which a part of a carboxylate group is substituted. The cobalt-containing polymer that contains an unsaturated bond can be produced by using a corresponding unsaturated carboxylic acid as a starting product.

A content of the cobalt-containing polymer is preferably not less than 0.5 parts by mass and more preferably not less than 1 part by mass, per 100 parts by mass of the rubber component since the effects of the present invention can be more advantageously obtained. The content of the cobalt-containing polymer is preferably not greater than 40 parts by mass, more preferably not greater than 30 parts by mass, even more preferably not greater than 20 parts by mass, still more preferably not greater than 10 parts by mass, and particularly preferably not greater than 8 parts by mass, per 100 parts by mass of the rubber component.

The hydrocarbyl group-containing cyclic polyol compound is a compound that has a hydrocarbyl group, has a cyclic structure, and further has a plurality of hydroxyl groups (-OH). When the hydrocarbyl group-containing cyclic polyol compound having such a structure is used in combination with the modified natural rubber and the cobalt-containing polymer, excellent rubber elasticity (steering stability), fuel economy, and durability (fatigue resistance) can be obtained in a well-balanced manner.

The number of carbon atoms of the hydrocarbyl group is preferably 6 to 24, more preferably 7 to 20, and even more preferably 8 to 17.

Examples of the hydrocarbyl group include alkyl groups, alkenyl groups, aryl groups, and aralkyl groups.

Examples of the alkyl group include a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an icosyl group, a heneicosyl group, a docosyl group, a tricosyl group, and a tetracosyl group.

Examples of the alkenyl group include a hexenyl group, a heptenyl group, an octenyl group, a nonenyl group, a decenyl group, an undecenyl group, a dodecenyl group, a tridecenyl group, a tetradecenyl group, a pentadecenyl group, a hexadecenyl group, a heptadecenyl group, an octadecenyl group, a nonadecenyl group, an icosenyl group, a heneicosenyl group, a docosenyl group, a tricosenyl group, and a tetracosenyl group.

Examples of the aryl group include a phenyl group and a tolyl group.

Examples of the aralkyl group include a benzyl group and a phenethyl group.

Among them, the hydrocarbyl group is preferably C6 to C24 alkyl groups and C6 to C24 alkenyl groups since the effects of the present invention can be more advantageously obtained.

In particular, the hydrocarbyl group-containing cyclic polyol compound is preferably a compound represented by chemical formula (i) described below. When the compound represented by chemical formula (i) described below is used, an effect of using the hydrocarbyl group-containing cyclic polyol compound in combination with the modified natural rubber and the cobalt-containing polymer can be more advantageously obtained, and more excellent rubber elasticity (steering stability), fuel economy, and durability (fatigue resistance) can be obtained in a well-balanced manner.

[Chemical formula 6]

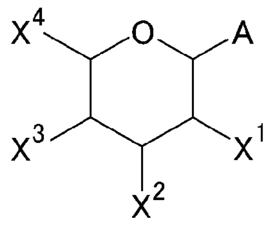

(i)

In chemical formula (i) described above, represents a C6 to C30 hydrocarbyl ester group or C6 to C30 hydrocarbyl ether group. $X^1$, $X^2$, $X^3$, and $X^4$ are the same or different from each other, and each other represent a hydrogen atom, a hydroxyl group (-OH), or a hydroxymethyl group. However, at least three of $X^1$, $X^2$, $X^3$, and $X^4$ are each a hydroxyl group.

In chemical formula (i) described above, A represents a C6 to C30 hydrocarbyl ester group or c6 to C30 hydrocarbyl ether group.

In A, the number of carbon atoms of the hydrocarbyl group moiety is preferably 6 to 24, more preferablu 7 to 20, and even more preferably 8 to 17.

In A of chemical formula (i) described above, a first atom (that is, an atom that binds to the cyclic structure) from the cyclic moiety or a second atom fron the cyclic moiety is preferably an oxygen atom. Examples of A in which the first atom from the cyclic moiety is an oxygen atom include a group represented by $-O-A^1$ or $-O-CO-A^2$. Examples of A in which the second atom from the cyclic moiety is an oxygen atom include a group represented by $-CH-O-A^2$ or $- CH_2-O-CO-A^3$.

$A^1$ preferably represents a C6 to C30 hydrocarbyl group, $A^2$ preferably represents a C5 to C20 hydrocarbyl group, and $A^3$ preferably represents a C4 to C28 hydrocarbyl group. Furthermore, each $A^1$, $A^2$, and $A^3$ more preferably represents a C6 to C24 hydrocarbyl group.

In chemical formula (i) described above, $X^1$, $X^2$, $X^3$ and $X^4$ are the same or different from each other, and each represent a hydrogen atom, a hydroxyl group (-OH), or a hydroxymethyl group. However, at least three of $X^1$, $X^2$, $X^3$ and $X^4$ each represent a hydroxyl group. When three or more of $X^1$, $X^2$, $X^3$ and $X^4$ are each a hydroxyl group,an effect of using the hydrocarbyl group-containing cyclic polyol compound in combination with the modified more excellent rubber elasticity (steering stability), fuel economy, and durability (fatigue resistance) can be obtained in a well-balanced manner.

As the hydrocarbyl group-containing cyclic polyol compound, a compound represented by chemical formula (ii) described below or chemical formula (iii) described below is more preferable, and a compound represented by chemical formula (ii) described belos is even more preferable, among compounds represented by chemical formula (i) described above, since the effects of the present invention can be more advantageously obtained.

[Chemical formula 7]

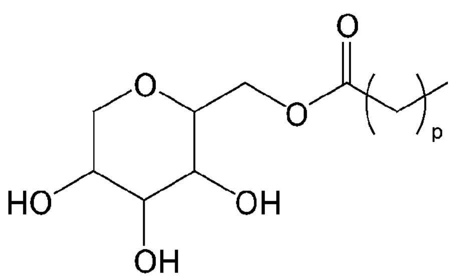

(ii)

In chemical formula (ii) described above, p represents a natural number.

[Chemical formula 8]

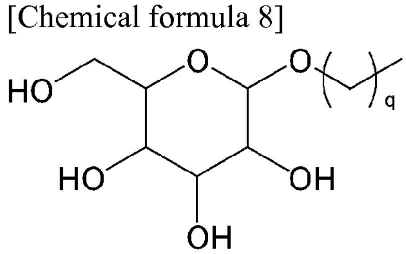

(iii)

In chemical formula (iii) described above, q represents a natural number.

In chemical formula (ii) described above, p preferably represents a natural number of 5 to 23, more preferably represents a natural number of 6 to 19, and even more preferably represents a natural number of 7 to 16. Furthermore, in chemical formula (iii) described above, q preferably represents a natural number of 5 to 23, more preferably represents a natural number of 6 to 19, and even more preferably represents a natural number of 7 to 16.

The hydrocarbyl group-containing cyclic polyol compound can be obtained, for example, by reacting aliphatic alcohol such as octanol, decanol, dodecanol, tetradecanol, and hexadecanol, or aliphatic carboxylic acid such as lauric acid, myristic acid, palmitic acid, stearic acid, and oleic acid, with polyol compound such as sorbit, sorbitan, glucose, and fructose, in a known standard method.

Specific examples of the hydrocarbyl group-containing cyclic polyol compound include: ester compound such as sorbitan monolaurate, sorbitan monomyristate, sorbitan monopalmitate, sorbitan monostearate, and sorbitan monooleate; and ether compound such as octyl-β-D-glucopyranoside, decyl-β-D-glucopyranoside, dodecyl-β-D-glucopyranoside, tetradecyl -β-D-glucopyranoside, and hexadecyl -β-D-glucopyranoside.

These compounds may be each used alone, or two or more of them may be used in combination.

A content of the hydrocarbyl group-containing cyclic polyol compound is preferably not less than 0.5 parts by mass and more preferably not less than 1 part by mass, per 100 parts by mass of the rubber component since the effects of the present invention can be more advantageously obtained. The content thereof is preferably not greater than 40 parts by mass, more preferably not greater than 30 parts by mass, even more preferably not greater than 20 parts by mass, still more preferably not greater than 10 parts by mass, and particularly preferably not greater than 8 parts by mass, per 100 parts by mass of the rubber component.

In the present invention, the rubber composition preferably includes a reinforcing agent. When the reinforcing agent is blended in addition to the modified natural rubber, the cobalt-containing polymer, and the hydrocarbyl group-containing cyclic polyol compound, reinforcing effect can be obtained, and more excellent rubber elasticity (steering stability), fuel economy, and durability can be obtained in a well-balanced manner.

As the reinforcing agent, carbon black and/or silica are preferably used. These reinforcing agents may be each used alone, or two or more of them may be used in combination. Among them, use of carbon black and silica in combination is particularly preferable from the standpoint that the effects of the present invention can be more advantageously obtained.

Examples of the carbon black include GPF, FEF, HAF, ISAF, and SAF. However, the carbon black is not particularly limited thereto. These kinds of carbon black may be each used alone, or two or more of them may be used in combination.

A nitrogen adsorption specific surface area ($N_2SA$) of the carbon black is preferably not less than 25 $m^2/g$, more preferably not less than 30 $m^2/g$, even more preferably not less than 50 $m^2/g$, and particularly preferably not less than 70 $m^2/g$. The $N_2SA$ of the carbon black is preferably not greater than 170 $m^2/g$, more preferably not greater than 150 $m^2/g$, even more preferably not greater than 140 $m^2/g$, still more preferably not greater than 130 $m^2/g$, particularly preferably not greater than 120 $m^2/g$, and most preferably not greater than 100 $m^2/g$. When the $N_2SA$ of the carbon black is less than 25 $m^2/g$, sufficient reinforcing effect may not be obtained. When the $N_2SA$ of the carbon black is greater than 170 $m^2/g$, fuel economy tends to be degraded.

The nitrogen adsorption specific surface area of the carbon black is obtained in compliance with the A method of JIS K6217.

When the carbon black is blended in the rubber composition of the present invention, a content of the carbon black is preferably not less than 1 part by mass, more preferably not less than 3 parts by mass, and even more preferably not less than 5 parts by mass, per 100 parts by mass of the rubber component. The content of the carbon black is preferably not greater than 100 parts by mass, more preferably not greater than 90 parts by mass, and even more preferably not greater than 80 parts by mass. When the content of the carbon black is within the above-described range, weather resistance and rubber strength can be improved, and the effects of the present invention can be more advantageously obtained.

The silica is not particularly limited, and examples of the silica include dry-process silica (silicic anhydride) and wet-process silica (hydrous silicic acid). Wet-process silica is preferable since it has a higher silanol group content. These kinds of the silica may be each used alone, or two or more of them may be used in combination.

A nitrogen adsorption specific surface area ($N_2SA$) of the silica is preferably not less than 40 $m^2/g$, more preferably not less than 50 $m^2/g$, even more preferably not less than 70 $m^2/g$, particularly preferably not less than 100 $m^2/g$, and most preferably not less than 150 $m^2/g$. When the $N_2SA$ of the silica is less than 40 $m^2/g$, breaking strength after vulcanization tends to be reduced. The $N_2SA$ of the silica is preferably not greater than 250 $m^2/g$ and more preferably not greater than 200 $m^2/g$. When the $N_2SA$ of the silica is greater than 250 $m^2/g$, fuel economy and processability of rubber tend to be deteriorated.

The nitrogen adsorption specific surface area of the silica is a value measured by the BET method in compliance with ASTM D3037-93.

In the present invention, when the silica is blended in the rubber composition, a content of the silica is preferably

not less than 20 parts by mass, more preferably not less than 25 parts by mass, and even more preferably not less than 30 parts by mass, per 100 parts by mass of the rubber component. The content of the silica is preferably not greater than 150 parts by mass, more preferably not greater than 120 parts by mass, even more preferably not greater than 100 parts by mass, and particularly preferably not greater than 80 parts by mass. When the content of the silica is within the above-described range, the effects of the present invention can be more advantageously obtained.

A content of the reinforcing agent (the carbon black and/or the silica) is preferably greater than 30 parts by mass and preferably less than 80 parts by mass, per 100 parts by mass of the rubber component. When the content of the reinforcing agent is within the above-described range, more excellent rubber elasticity (steering stability), fuel economy, and durability can be obtained in a well-balanced manner while sufficient reinforcing effect is exhibited. That is, the content of the reinforcing agent (the carbon black and/or the silica) preferably satisfies expression (A) described below.
[Mathematical expression 2]

$$30 < \left(\sum X_j + \sum Z_k\right) < 80 \qquad \text{(A)}$$

In expression (A) described above, Xj represents a content (parts by mass) of carbon black j with respect to 100 parts by mass of the rubber component (j=0, 1, 2, ··· m, m represents an integer that is not less than 0), and Zk represents a content (parts by mass) of silica k with respect to 100 parts by mass of the rubber component (k=0, 1, 2, ··· n, n represents an integer that is not less than 0). That is, expression (A) described above indicates that the total of the content of m kinds of carbon blacks contained in the rubber composition and the content of n kinds of silicas contained in the rubber composition is greater than 30 parts by mass and less than 80 parts by mass, per 100 parts by mass of the rubber component (m represents an integer that is not less than 0. n represents an integer that is not less than 0).

The value of expression (A) described above is more preferably not less than 35 and even more preferably not less than 40. The value of expression (A) described above is more preferably not greater than 75.

Furthermore, the reinforcing agent (the carbon black and/or the silica) is preferably blended such that the sum of contents each divided by the nitrogen adsorption specific surface area is greater than 0.2 and less than 1.2. When the nitrogen adsorption specific surface area and the content of the reinforcing agent are within the above-described range, more excellent rubber elasticity (steering stability), fuel economy, and durability can be obtained in a well-balanced manner while sufficient reinforcing effect is exhibited. That is, the content of the reinforcing agent (the carbon black and/or the silica) preferably satisfies expression (B) described below.
[Mathematical expression 3]

$$0.2 < \left(\sum \frac{X_j}{Y_j} + \sum \frac{Z_k}{W_k}\right) < 1.2 \qquad \text{(B)}$$

In expression (B) described above, Xj represents a content (parts by mass) of the carbon black j with respect to 100 parts by mass of the rubber component, Yj represents a nitrogen adsorption specific surface area ($m^2/g$) of the carbon black j (j=0, 1, 2, ··· m, m represents an integer that is not less than 0), Zk represents a content (parts by mass) of the silica k with respect to 100 parts by mass of the rubber component, and Wk represents a nitrogen adsorption specific surface area ($m^2/g$) of the silica k (k=0, 1, 2, ··· n, n represents an integer that is not less than 0). That is, expression (B) described above indicates that the sum of a content obtained by contents of m kinds of carbon blacks in the rubber composition being divided by nitrogen adsorption specific surface areas of the carbon blacks and a content obtained by contents of n kinds of silicas in the rubber composition being divided by nitrogen adsorption specific surface areas of the silicas, is greater than 0.2 and less than 1.2 (m represents an integer that is not less than 0. n represents an integer that is not less than 0).

More specifically, as to expression (B) described above, when the content of the carbon black and the silica is excessively great, fuel economy tends to be degraded, and, when the content thereof is excessively small, durability tends to be degraded. Meanwhile, when the nitrogen adsorption specific surface area of each of the carbon black and the silica is excessively great, fuel economy tends to be degraded, and, when the nitrogen adsorption specific surface area thereof is excessively small, durability tends to be degraded. However, when the reinforcing agent satisfies expression (B) described above, more excellent rubber elasticity (steering stability), fuel economy, and durability can be obtained in a well-balanced manner while sufficient reinforcing effect is exhibited.

The value of expression (B) described above is more preferably not less than 0.23, even more preferably not less than 0.34, and particularly preferably not less than 0.43. The value of expression (B) described above is more preferably not greater than 1.00, even more preferably not greater than 0.90, and particularly preferably not greater than 0.75.

In the present invention, when the rubber composition contains the silica, the rubber composition preferably

contains a silane coupling agent in addition to the silica.

As the silane coupling agent, any silane coupling agent that has been conventionally used in combination with silica can be used. Examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropyl benzothiazolyl tetrasulfide, 3-triethoxysilylpropyl benzothiazole tetrasulfide, 3-triethoxysilylpropyl methacrylate monosulfide, and 3-trimethoxysilylpropyl methacrylate monosulfide; mercapto silane coupling agents such as 3-mercaptopropyltrimethoxysilane, 3-mercaptopropyltriethoxysilane, 2-mercaptoethyltrimethoxysilane, 2-mercaptoethyltriethoxysilane, and 3-octanoylthio-1-propyltriethoxysilane; vinyl silane coupling agents such as vinyltriethoxysilane and vinyltrimethoxysilane; amino silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; nitro silane coupling agents such as 3-nitropropyltrimethoxysilane and 3-nitropropyltriethoxysilane; and chloro silane coupling agents such as 3-chloropropyltrimethoxysilane, 3-chloropropyltriethoxysilane, 2-chloroethyltrimethoxysilane, and 2-chloroethyltriethoxysilane. For example, silane coupling agents having trade names Si69, Si75, Si266, Si363 (manufactured by Degussa) and trade names NXT, NXT-LV, NXTULV, and NXT-Z (manufactured by Momentive) can be used. Among them, the sulfide silane coupling agent is preferable since good fuel economy can be obtained.

These silane coupling agents may be each used alone, or two or more of them may be used in combination.

In the present invention, when the silane coupling agent is blended in the rubber composition, a content of the silane coupling agent is preferably not less than 0.5 parts by mass, more preferably not less than 1.5 parts by mass, and even more preferably not less than 2.5 parts by mass, per 100 parts by mass of the silica. The content of the silane coupling agent is preferably not greater than 20 parts by mass, more preferably not greater than 15 parts by mass, and even more preferably not greater than 10 parts by mass. When the content of the silane coupling agent is within the above-described range, dispersibility of the silica can be enhanced to improve processability, and the effects of the present invention can be more advantageously obtained.

In the present invention, the rubber composition preferably contains a softener. The softener is not particularly limited. Examples of the softener include oils such as aromatic mineral oil (viscosity-gravity constant (V.G.C. value) is 0.900 to 1.049), naphthenic mineral oil (V.G.C. value is 0.850 to 0.899), and paraffinic mineral oil (V.G.C. value is 0.790 to 0.849). The polycyclic aromatic content of the oil is preferably less than 3% by mass and more preferably less than 1% by mass. The polycyclic aromatic content is measured in accordance with the UK Institute of Petroleum 346/92 method. A content of an aromatic component (CA) in the oil is preferably not less than 20% by mass.

Furthermore, as the softener, liquid polymer (liquid diene-based polymer), liquid resin, vegetable oil, ester-based plasticizer, and the like can be also used.

These softeners may be each used alone, or two or more of them may be used in combination.

In the present invention, when the softener is blended in the rubber composition, a content of the softener is preferably not less than 0.5 parts by mass and more preferably not less than 1 part by mass, per 100 parts by mass of the rubber component since the effects of the present invention can be more advantageously obtained. The content of the softener is preferably not greater than 40 parts by mass, more preferably not greater than 30 parts by mass, and even more preferably not greater than 20 parts by mass, per 100 parts by mass of the rubber component.

In the description herein, when insoluble sulfur described below is used as a vulcanizing agent, the content of the softener includes an amount of oil contained in the insoluble sulfur.

In the present invention, a filler such as pulverized bituminous coal, calcium carbonate, talc, alumina, clay, aluminium hydroxide, mica, and hard clay may be blended in the rubber composition. Among them, at least one kind of semi-reinforcing fillers selected from the group consisting of pulverized bituminous coal, talc, mica, and hard clay is preferably blended. These semi-reinforcing fillers do not form polymer gel during kneading, and, therefore, good sheet processability is obtained.

As the semi-reinforcing filler, pulverized bituminous coal, talc, and hard clay are preferable in view of sheet processability and cost.

An average particle size of the talc is preferably not greater than 50 μm and more preferably not greater than 30 μm. When the average particle size of the talc is within the above-described range, fuel economy can be further improved. The lower limit of the average particle size of the talc is not particularly defined, but the average particle size of the talc is

preferably not less than 1 μm.

An average particle size of the mica is preferably not greater than 50 μm and more preferably not greater than 30 μm. When the average particle size of the mica is within the above-described range, fuel economy can be further improved. The lower limit of the average particle size of the mica is not particularly defined, but the average particle size of the mica is preferably not less than 1 μm.

An average particle size of the hard clay is preferably not greater than 50 μm and more preferably not greater than 30 μm. When the average particle size of the hard clay is within the above-described range, fuel economy can be further improved. The lower limit of the average particle size of the hard clay is not particularly defined, but the average particle size of the hard clay is preferably not less than 1 μm.

In the description herein, the average particle size of the semi-reinforcing filler is an average particle size on a mass basis as calculated from a particle size distribution measured in compliance with JIS Z 8815-1994.

In the present invention, the rubber composition is used for producing steel breaker topping rubber. The cobalt-containing polymer and the hydrocarbyl group-containing cyclic polyol compound are preferably blended in addition to the modified natural rubber since the effects of the present invention can be advantageously obtained and adhesiveness to a steel breaker is improved. It is also preferable that cobalt salt of an organic acid is blended in order to improve adhesiveness to a steel breaker. Cobalt salt of an organic acid acts so as to crosslink rubber and a steel breaker. Therefore, when cobalt salt of an organic acid is contained, adhesiveness of a steel breaker and rubber to each other can be improved.

Examples of the cobalt salt of an organic acid include cobalt stearate, cobalt naphthenate, cobalt neodecanoate, cobalt boron 3 neodecanoate, and cobalt abietate. Among them, cobalt stearate is preferable since cobalt stearate exhibits excellent processability (viscosity), and allows vulcanization to easily progress.

In the present invention, when the cobalt salt of an organic acid is blended in the rubber composition, a content of the cobalt salt of an organic acid is preferably not less than 0.05 parts by mass and more preferably not less than 0.07 parts by mass, in terms of cobalt, per 100 parts by mass of the rubber component. The content thereof is preferably not greater than 0.15 parts by mass and more preferably not greater than 0.12 parts by mass. When the content thereof is within the above-described range, adhesiveness of a steel breaker and rubber to each other is sufficient, and oxidative deterioration resistance, crack growth resistance, and durability can be improved.

In the rubber composition of the present invention, blending ingredients, which are generally used in the tire industry, such as resin other than the above-described softener, wax, various anti-aging agents, stearic acid, zinc oxide, processing aid, vulcanizing agent like sulfur, and vulcanization accelerator other than the above-described components, may be blended as appropriate.

The anti-aging agent which is usable in the present invention is not particularly limited. Examples of the anti-aging agent include naphthylamine anti-aging agents, quinoline anti-aging agents, diphenylamine anti-aging agents, p-phenylenediamine anti-aging agents, hydroquinone derivatives, phenol (monophenol, bisphenol, trisphenol, polyphenol) anti-aging agents, thiobisphenol anti-aging agents, benzimidazole anti-aging agents, thiourea anti-aging agents, phosphite anti-aging agents, and organic thioacid anti-aging agents. These anti-aging agents may be each used alone, or two or more of them may be used in combination.

Among the above-described anti-aging agents, p-phenylenediamine anti-aging agents are preferable. Examples of the p-phenylenediamine anti-aging agent include N-(1,3-dimethylbutyl)-N'-phenyl-p-phenylenediamine, N-phenyl-N'-isopropyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine.

In the present invention, when the anti-aging agent is blended in the rubber composition, a content of the anti-aging agent is preferably 1 to 10 parts by mass per 100 parts by mass of the rubber component.

In the present invention, the rubber composition preferably contains zinc oxide. Thus, vulcanization can be smoothly performed, and isotropy in stiffness and physical properties can be obtained. Zinc oxide is not particularly limited, and zinc oxide which has been conventionally used in the rubber industry can be used. Examples of the zinc oxide include zinc oxide (for example, Ginrei R manufactured by Toho Zinc Co., Ltd., and zinc oxide manufactured by MITSUI MINING & SMELTING CO., LTD.), and particulate zinc oxide having an average particle size of not greater than 200 nm (for example, ZINCOX SUPER F-2 manufactured by HakusuiTech Co., Ltd.). These kinds of zinc oxide may be each used alone, or two or more of them may be used in combination.

In the present invention, when the zinc oxide is blended in the rubber composition, a content of the zinc oxide is preferably not less than 1.0 part by mass and more preferably not less than 1.5 parts by mass, per 100 parts by mass of the rubber component. The content of the zinc oxide is preferably not greater than 20 parts by mass and more preferably not greater than 15 parts by mass. When the content of the zinc oxide is within the above-described range, rubber hardness Hs can be sufficiently obtained, and breaking strength can be enhanced.

The vulcanizing agent is not particularly limited. Sulfur, alkylphenol-sulfur chloride condensates, and the like can be preferably used, and sulfur is preferable, and insoluble sulfur is particularly preferable.

These vulcanizing agents may be each used alone, or two or more of them may be used in combination.

A content of the vulcanizing agent is preferably not less than 0.1 parts by mass, more preferably not less than 0.3 parts by mass, and even more preferably not less than 2 parts by mass, per 100 parts by mass of the rubber component. The content of the vulcanizing agent is preferably not greater than 10 parts by mass and more preferably not greater than 7 parts by mass. When the content of the vulcanizing agent is adjusted so as to be within the above-described range, the effects of the present invention can be more advantageously obtained.

Examples of the vulcanization accelerator include sulfenamide-based, thiazole-based, thiuram-based, thiourea-based, guanidine-based, dithiocarbamic acid-based, aldehyde-amine-based, aldehyde-ammonia-based, imidazoline-based, and xanthate-based vulcanization accelerators. These vulcanization accelerators may be each used alone, or two or more of them may be used in combination. Among them, sulfenamide-based and guanidine-based vulcanization accelerators are preferable, and sulfenamide-based vulcanization accelerators are more preferable since the effects of the present invention can be more advantageously obtained.

Examples of the sulfenamide-based vulcanization accelerator include N-tert-butyl-2-benzothiazolesulfenamide (TBBS), N-cyclohexyl-2-benzothiazolesulfenamide (CBS), and N,N-dicyclohexyl-2-benzothiazolesulfenamide (DCBS).

A content of the vulcanization accelerator is preferably not less than 0.1 parts by mass, more preferably not less than 0.5 parts by mass, and even more preferably not less than 1 part by mass, per 100 parts by mass of the rubber component. The content of the vulcanization accelerator is preferably not greater than 10 parts by mass, more preferably not greater than 8 parts by mass, even more preferably not greater than 6 parts by mass, and particularly preferably not greater than 4 parts by mass. When the content of the vulcanization accelerator is adjusted so as to be within the above-described range, the effects of the present invention can be more advantageously obtained.

In the present invention, as a method for manufacturing the rubber composition, a known method can be used. The rubber composition can be manufactured in, for example, a method in which each component is kneaded by using a rubber kneading device such as an open roll and a Banbury mixer, and the kneaded product is thereafter vulcanized.

The rubber composition of the present invention is used for topping rubber of steel breakers of pneumatic tires.

The breaker is a member disposed on the outer side of a case in the tire radial direction. Specifically, the breaker is a member described in, for example, FIG. 3 in Japanese Laid-Open Patent Publication No. 2003-94918, FIG. 1 in Japanese Laid-Open Patent Publication No. 2006-273934, and FIG. 1 in Japanese Laid-Open Patent Publication No. 2004-161862.

The pneumatic tire of the present invention is manufactured by using the above-described rubber composition in a standard method. That is, the rubber composition having the above-described components blended therein in an unvulcanized state is disposed so as to top a steel breaker, extruded and processed, and shaped together with other tire members, in a tire forming machine, in a standard method, to form an unvulcanized tire. The unvulcanized tire is heated and pressurized in a vulcanizer, to obtain a tire.

The pneumatic tire of the present invention is preferably used as tires for passenger cars, tires for trucks and buses, tires for two-wheeled vehicles, tires for racing, and the like. In particular, the pneumatic tire of the present invention is preferably used as tires for passenger cars.

[Examples]

The present invention will be specifically described based on examples. However, the present invention is not limited to examples only.

Various chemicals will be collectively described below.

Field latex: field latex available from Muhibbah Lateks

EMAL E-27C (surfactant): EMAL E-27C (sodium polyoxyethylene lauryl ether sulfate, active ingredient: 27% by mass) manufactured by Kao Corporation

NaOH: NaOH available from FUJIFILM Wako Pure Chemical Corporation

Wingstay L (anti-aging agent): Wingstay L (compound obtained by butylating a condensate of ρ-cresol and dicyclopentadiene) manufactured by ELIOKEM

Emulvin W (surfactant): Emulvin W (aromatic polyglycol ether) manufactured by LANXESS

Tamol NN9104 (surfactant): Tamol NN9104 (sodium salt of naphthalenesulfonic acid/formaldehyde) manufactured by BASF

Van gel B (surfactant): Van gel B (hydrated magnesium aluminium silicate) manufactured by Vanderbilt

(Preparation of anti-aging agent dispersion)

12.5 g of Emulvin W, 12.5 g of Tamol NN9104, 12.5 g of Van gel B, and 500 g of Wingstay L were mixed in 462.5 g of water (1000 g in total) by using a ball mill for 16 hours, to prepare anti-aging agent dispersion.

(Production example 1)

The solid content concentration (DRC) of the field latex was adjusted to 30% (w/v). 25 g of 10% aqueous solution of EMAL E-27C and 60 g of 25% NaOH aqueous solution were added in 1000 g of the latex, and the mixture was saponified at room temperature for 24 hours, to obtain saponified natural rubber latex. Subsequently, 6 g of the anti-aging agent dispersion was added and the mixture was agitated for two hours. Water was further added to dilute the mixture such that the rubber concentration was 15% (w/v). Subsequently, while the mixture was slowly agitated, formic acid was added and the pH was adjusted to 4.0. Cationic polymer flocculant was added, and the mixture was agitated for two minutes and aggregated. The aggregated product having been thus obtained was taken out, and was immersed in 1000 ml of 2% by mass of aqueous solution of sodium carbonate at room temperature for four hours, rubber was taken out, 2000 ml of water was added to the taken rubber and agitated for two minutes, and the resultant rubber was dehydrated as much as possible. These operations were repeated seven times. Thereafter, 500 ml of water was added, 2% by mass of formic acid was added until the pH became 4, the obtained product was left as it was for 15 minutes and was further dehydrated as much as possible, water was added again, and the obtained product was agitated for two minutes. These operations were repeated three times, and water was wrung out by using a water wringing roll, and the obtained product was formed into a sheet-like product, and dried at 90°C for four hours, to obtain solid rubber (modified natural rubber).

When the solid rubber (modified natural rubber) obtained as described above was measured in the measurement method described below, results were obtained as indicated below in Table 1.

<Measurement of pH of rubber>

5 g of the obtained rubber was cut such that the total of the sizes of three sides was not greater than 5 mm (about 1 to 2×about 1 to 2×about 1 to 2 (mm)) and the cut rubber pieces were put into a 100 ml beaker. 50 ml of distilled water at room temperature was added into the beaker and the temperature was increased to 90°C for two minutes. Thereafter, while the temperature was adjusted so as to be maintained at 90°C, microwaves (300W) were applied for 13 minutes (15 minutes in total), and the immersion water was then cooled by an ice bath to 25°C, and the pH of the immersion water was measured by using a pH meter.

<Measurement of nitrogen content>

(Acetone extraction (production of test piece))

The solid rubber was finely cut into 1 mm square pieces to obtain samples. About 0.5g of the sample was prepared, and immersed in 50 g of acetone at room temperature (25°C) for 48 hours. After that, the rubber was taken out and dried to obtain each test piece.

(Measurement)

The nitrogen content of the obtained test piece was measured in the method described below.

The nitrogen content was determined in the following manner. That is, each test piece obtained in the acetone extraction as described above was decomposed and gasified by using a trace nitrogen/carbon analyzer "SUMIGRAPH NC95A" (manufactured by Sumika Chemical Analysis Service, Ltd.), and the gas was analyzed by using a gas chromatograph "GC-8A (manufactured by SHIMADZU CORPORATION)", to determine the nitrogen content.

<Measurement of phosphorus content>

An ICP emission spectrometer (P-4010 manufactured by Hitachi, Ltd.) was used to obtain a phosphorus content.

<Measurement of gel content>

Raw rubber was cut into 1 mm × 1 mm samples and about 70 mg of the sample was accurately measured. 35 mL of toluene was added to the sample, and the mixture was left in a cool, dark place for one week. Subsequently, the mixture was centrifuged, and a gel portion which was insoluble in toluene was precipitated, and supernatant soluble portion was

removed, and only the gel portion was solidified with methanol and dried. The mass of the resultant gel portion was measured. The gel content (% by mass) was obtained according to the following equation.

$$\text{Gel content (\% by mass)}=[\text{mass mg after drying}/\text{initial sample mass mg}]\times 100$$

[Table 1]

| | Modified natural rubber |
|---|---|
| | Production example 1 |
| pH | 5.0 |
| Nitrogen content (% by mass) | 0.07 |
| Phosphorus content (ppm) | 92 |
| Gel content (% by mass) | 6 |

(Production example 2)

350 g of neodecanoic acid and 590 g of dimer fatty acid were added in a 2 L roundbottom glass reactor equipped with an agitator, heating means, a water-cooled condenser, and means for nitrogen flow, and the mixture was agitated in nitrogen, and the temperature was increased to 120°C. Small amounts of cobalt hydroxide were added to the mixture over six hours such that 190 g of cobalt hydroxide was added in total while the reaction temperature was slowly increased to 160 to 170°C. Thereafter, the reaction mixture was maintained at 180°C for two hours, to end the reaction. The product having been thus obtained was taken out, cooled, solidified, and pelletized to obtain cobalt-containing polymer. The cobalt-containing polymer having been thus obtained was measured in the measurement method described below. The result of the measurement indicated that the weight-average molecular weight was 3700. The cobalt content measured by X-ray fluorescence analysis was 11.2% by mass.

<Measurement of weight-average molecular weight>

The Mw of the cobalt-containing polymer was obtained by polystyrene standard conversion based on a value measured by gel permeation chromatography (GPC) (device: GPC-8000 series manufactured by Tosoh Corporation, detector: differential refractometer, column: TSKgel SuperMultipore HZ-M manufactured by Tosoh Corporation).

Various chemicals will be described below.

NR: TSR20
Modified natural rubber: the modified natural rubber obtained in Production example 1
Carbon black: DIABLACK LH ($N_2SA$: 84 $m^2/g$) manufactured by Mitsubishi Chemical Corporation
Silica: Ultrasil VN3 ($N_2SA$: 175 $m^2/g$) manufactured by Evonik Degussa
Silane coupling agent: Si266 (bis(3-triethoxysilylpropyl)disulfide) manufactured by Evonik Degussa
Oil: X-140 manufactured by JXTG Nippon Oil & Energy Corporation
Cobalt-containing polymer: the cobalt-containing polymer obtained in Production example 2
Hydrocarbyl group-containing cyclic polyol compound: sorbitan monolaurate (manufactured by Kao Corporation, trade name "RHEODOL SP-L10")
Anti-aging agent: ANTIGENE 3C (N-phenyl-N'-isopropyl-p-phenylenediamine) manufactured by Sumitomo Chemical Company, Limited
Cobalt stearate: cobalt stearate manufactured by IREC Co., Ltd.
Zinc oxide: "Zinc Oxide No. 1" manufactured by MITSUI MINING & SMELTING CO., LTD.
Sulfur: CRYSTEX HSOT20 (insoluble sulfur containing 80% by mass of sulfur and 20% by mass of oil) manufactured by Flexsys
Vulcanization accelerator: Soxinol CZ (N-cyclohexyl-2-benzothiazolesulfenamide) manufactured by Sumitomo Chemical Company, Limited

(Inventive Example 7, Reference Examples 1-6, 8-9, and Comparative examples 1-4)

Materials other than the sulfur and the vulcanization accelerator were kneaded at 150°C for five minutes by using

a 1.7 L Banbury mixer manufactured by Kobe Steel, Ltd. in accordance with the blending formula indicated in Table 2, to obtain a kneaded product. Subsequently, the sulfur and the vulcanization accelerator were added in the obtained kneaded product, and kneaded by using an open roll at 80°C for five minutes, to obtain unvulcanized rubber composition. The obtained unvulcanized rubber composition was press-vulcanized at 170°C for 20 minutes by using a mold having a thickness of 0.5 mm, to obtain vulcanized rubber composition. The unvulcanized rubber composition having been obtained as described above was disposed so as to top a steel breaker and shaped, and adhered to other tire members on a tire former, and vulcanized at 150°C for 30 minutes, whereby a test tire (size: 195/65R15) was able to be manufactured.

The vulcanized rubber composition and test tires having been thus obtained were evaluated in the evaluation method described below. Results were obtained as indicated below in Table 2.

(Viscoelasticity measurement)

The dynamic elastic modulus (E* [MPa]) and loss tangent (tanδ) of the vulcanized rubber composition were measured, by using a viscoelasticity spectrometer VES (manufactured by Iwamoto Seisakusho), at 70°C, a frequency of 10 Hz, an initial strain of 10%, and a dynamic strain of 2%.

(Tensile test)

The tensile test was conducted by using a No. 3 dumbbell type test piece formed by the vulcanized rubber composition in compliance with JIS K6251 "Rubber, vulcanized or thermoplastics - Determination of tensile stress-strain properties", and elongation at break (tensile elongation; EB [%]) of the vulcanized rubber composition was measured.

A value of expression (1) described below was calculated from values obtained by the viscoelasticity measurement and the tensile test.

$$EB \times E^{*}/\tan\delta \qquad (1)$$

(Steering stability)

The test tires were mounted to all wheels of a vehicle (FF2000 cc manufactured in Japan), and the vehicle was caused to actually run on a test course. Steering stability was evaluated, based on sensory evaluation by a driver, when the vehicle zigzagged. Furthermore, steering stability was evaluated immediately after start of the test and evaluated when 30 minutes elapsed after the start of the test. The above-described evaluations were integrated and indicated as a relative evaluation with steering stability of comparative example 1 being 100. The greater the value is, the more excellent the steering stability is.

(Tire durability test)

Each test tire was mounted on a JIS specification 15×6JJ rim, and running with the tire was performed at room temperature (38°C) at a speed of 80 km/h on a φ1707 mm drum under the test condition that air pressure was 150 kPa and a load was 6.96 kN. The running distance was measured until damage such as crack in steel breaker topping rubber was caused. A running distance of each tire was calculated and indicated as an index by using the calculation expression described below with a tire durability index of comparative example 1 being 100. The greater the index is, the more excellent the tire durability (durability) is and the better the evaluation is.

(Tire durability index)=(running distance of each tire)/(running distance of tire of comparative example 1)×100

(Fuel economy)

Running with the test tire on a rim (15×6JJ) was performed at an internal pressure of 230 kPa, a load of 3.43 kN, and a speed of 80 km/h, and rolling resistance was measured by using a rolling resistance testing machine. The result is indicated as an index with the index of comparative example 1 being 100. The greater the index is, the better the evaluation (fuel economy) is.

"Total of three performances" in Table 2 represents the total of indexes of steering stability, tire durability, and fuel economy, and is a value that represents an index of balance among these performances. The greater the value is, the more excellent performance balance among steering stability, tire durability, and fuel economy is.

[Table 2]

| | | Ex. 1 | Ex. 2 | Ex. 3 | Ex. 4 | Ex. 5 | Ex. 6 | Ex. 7 | Ex. 8 | Ex. 9 | Comp. Ex. 1 | Comp. Ex. 2 | Comp. Ex. 3 | Comp. Ex. 4 |
|---|---|---|---|---|---|---|---|---|---|---|---|---|---|---|
| Blended amount (Parts by mass) | NR | 40 | 30 | 20 | 10 | - | - | - | - | - | 100 | 100 | 100 | 100 |
| | Modified natural rubber | 60 | 70 | 80 | 90 | 100 | 100 | 100 | 100 | 100 | - | - | - | - |
| | Carbon black | 60 | 60 | 60 | 60 | 60 | - | 5 | - | 75 | 70 | 50 | 30 | 105 |
| | Silica | - | - | - | - | - | 60 | 30 | 75 | - | - | - | - | - |
| | Silane coupling agent | - | - | - | - | - | 10 | 3 | 7.5 | - | - | - | - | - |
| | Oil | 2 | 2 | 2 | 2 | 2 | - | - | 2 | 5 | 10 | - | - | 40 |
| | Cobalt-containing polymer | 1 | 1 | 1 | 1 | 1 | 1 | 1 | 1 | 1 | - | - | - | - |
| | Hydrocarbyl group-containing cyclic polyol compound | 1 | 1 | 1 | 1 | 1 | 1 | 1 | 1 | 1 | - | - | - | - |
| | Anti-aging agent | 2 | 2 | 2 | 2 | 2 | 2 | 2 | 2 | 2 | 2 | 2 | 2 | 2 |
| | Cobalt stearate | 1 | 1 | 1 | 1 | 1 | 1 | 1 | 1 | 1 | 1 | 1 | 1 | 1 |
| | Zinc oxide | 10 | 10 | 10 | 10 | 10 | 10 | 10 | 10 | 10 | 10 | 10 | 10 | 10 |
| | Sulfur | 6.5 | 6.5 | 6.5 | 6.5 | 6.5 | 6.5 | 8.5 | 6.5 | 7 | 6.5 | 6.5 | 6.5 | 6.5 |
| | Vulcanization accelerator | 1.2 | 1.2 | 1.2 | 1.2 | 1.2 | 1.2 | 1.2 | 1.2 | 1.2 | 1.2 | 1.2 | 1.2 | 1.2 |
| Rubber physical properties | tanδ | 0.11 | 0.10 | 0.10 | 0.09 | 0.09 | 0.08 | 0.05 | 0.10 | 0.12 | 0.16 | 0.10 | 0.07 | 0.29 |
| | E* [MPa] | 6.7 | 6.7 | 6.8 | 6.8 | 6.9 | 6.9 | 6.0 | 7.4 | 8.0 | 6.0 | 4.9 | 3.3 | 6.1 |
| | EB [%] | 420 | 410 | 401 | 396 | 390 | 400 | 375 | 370 | 365 | 350 | 390 | 450 | 300 |
| | Value of expression (1) | 25582 | 27470 | 27268 | 29920 | 29900 | 34500 | 45000 | 27380 | 24333 | 13125 | 19110 | 21214 | 6310 |
| Blending of reinforcing agent | Value of expression (A) | 60 | 60 | 60 | 60 | 60 | 60 | 35 | 75 | 75 | 70 | 50 | 30 | 105 |
| | Value of expression (B) | 0.71 | 0.71 | 0.71 | 0.71 | 0.71 | 0.34 | 0.23 | 0.43 | 0.89 | 0.83 | 0.60 | 0.36 | 1.25 |
| Tire performance | Steering stability | 105 | 105 | 106 | 106 | 107 | 107 | 100 | 110 | 112 | 100 | 92 | 83 | 100 |
| | Tire durability | 116 | 121 | 119 | 125 | 123 | 130 | 155 | 115 | 107 | 100 | 95 | 85 | 95 |
| | Fuel economy | 105 | 105 | 105 | 107 | 107 | 107 | 111 | 105 | 105 | 100 | 105 | 108 | 75 |
| | Total of three performances | 326 | 331 | 330 | 338 | 337 | 344 | 366 | 330 | 324 | 300 | 292 | 276 | 270 |

## Claims

**1.** A pneumatic tire comprising steel breaker topping rubber produced by using a rubber composition, wherein

rubber physical properties of the rubber composition satisfy expression (1) described below after vulcanization of the rubber composition:

$$43000 < EB \times E^{*}/\tan\delta \qquad (1)$$

wherein in expression (1), $\tan\delta$ represents $\tan\delta$ obtained by viscoelasticity measurement performed at 70°C, a frequency of 10 Hz, an initial strain of 10%, and a dynamic strain of 2%, wherein in expression (1), E* represents a dynamic elastic modulus (E* [MPa]) obtained by viscoelasticity measurement performed at 70°C, a frequency of 10 Hz, an initial strain of 10%, and a dynamic strain of 2%, and wherein in expression (1), EB represents a tensile elongation (EB [%]) measured in compliance with JIS K6251,
wherein the rubber composition comprises:

(1) a rubber component,
(2) a cobalt-containing polymer of chemical formula (I), (II) or (III) and
(3) a hydrocarbyl group-containing cyclic polyol compound, and
(4) a reinforcing agent,

wherein the cobalt-containing polymer of chemical formula (I) is

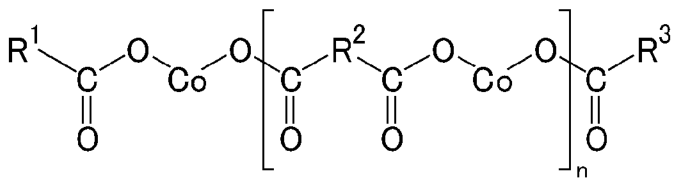

(I)

wherein in chemical formula (I), $R^1$ and $R^3$ are the same or different from each other, and each represent a linear or branched C5 to C36 hydrocarbon group, $R^2$ represents a linear or branched C5 to C36 hydrocarbon group, n represents an integer that is not less than 2,
wherein the cobalt-containing polymer of chemical formula (II) is

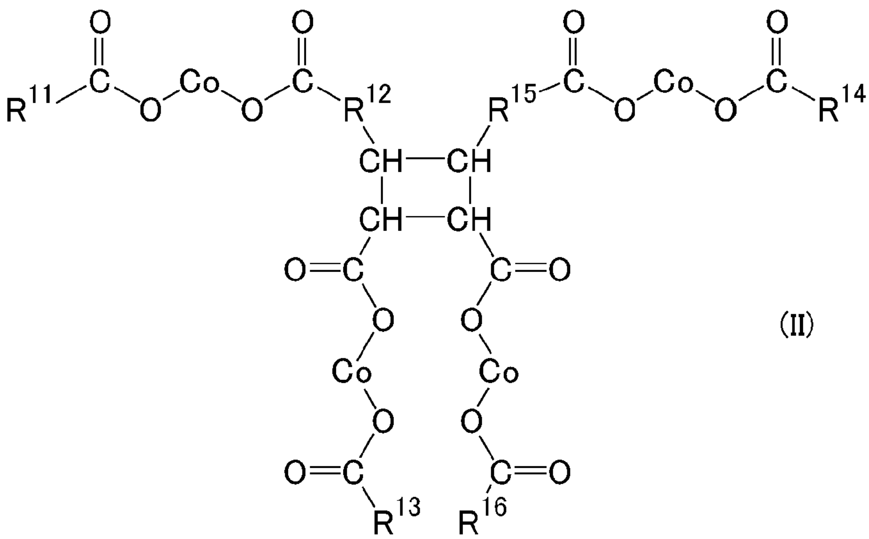

(II)

wherein in chemical formula (II), $R^{11}$, $R^{13}$, $R^{14}$, and $R^{16}$ are the same or different from each other, and each represent a linear or branched C5 to C36 hydrocarbon group, $R^{12}$ and $R^{15}$ are the same or different from each other, and each represent a linear or branched C5 to C36 hydrocarbon group,
wherein the cobalt-containing polymer of chemical formula (III) is

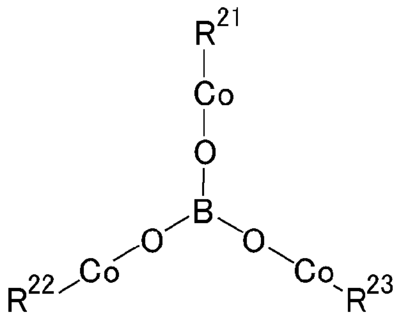

(III)

wherein in chemical formula (III), $R^{21}$, $R^{22}$, and $R^{23}$ are the same or different from each other, and each represent a group represented by chemical formula (IIIa) or a group represented by chemical formula (IIIb),
wherein the cobalt-containing polymer of chemical formula (IIIa) is

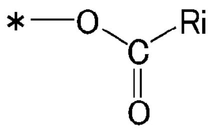

(IIIa)

wherein in chemical formula (IIIa), Ri represents a linear or branched C5 to C36 hydrocarbon group, * represents a binding moiety that binds to a cobalt atom,
wherein the cobalt-containing polymer of chemical formula (IIIb) is

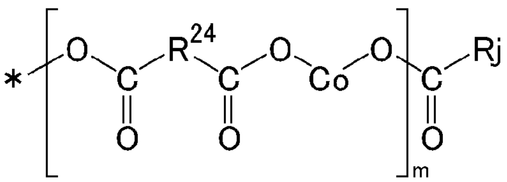

(IIIb)

wherein in chemical formula (IIIb), Rj represents a linear or branched C5 to C36 hydrocarbon group, $R^{24}$ represents a linear or branched C5 to C36 hydrocarbon group, m represents an integer that is not less than 2, * represents a binding moiety that binds to a cobalt atom.

2. The pneumatic tire according to claim 1, wherein the reinforcing agent is selected from carbon black and/or silica.

3. The pneumatic tire according to claim 2, wherein a content of the carbon black and/or the silica satisfies expressions (A) and (B) described below: [Mathematical expression 1]

[Mathematical expression 1]

$$30 < \left(\sum X_j + \sum Z_k\right) < 80 \qquad (A)$$

$$0.2 < \left(\sum \frac{X_j}{Y_j} + \sum \frac{Z_k}{W_k}\right) < 1.2 \qquad (B)$$

wherein in expression (A), Xj represents a content (parts by mass) of carbon black j with respect to 100 parts by mass of a rubber component (j=0, 1, 2, ⋯ m, m represents an integer that is not less than 0), and Zk represents a content (parts by mass) of silica k with respect to 100 parts by mass of the rubber component (k=0, 1, 2, ⋯ n, n represents an integer that is not less than 0), and wherein in expression (B), Xj represents a content (parts by mass) of the carbon

black j with respect to 100 parts by mass of the rubber component, and Yj represents a nitrogen adsorption specific surface area ($m^2/g$) of the carbon black j (j=0, 1, 2, ⋯ m, m represents an integer that is not less than 0), Zk represents a content (parts by mass) of the silica k with respect to 100 parts by mass of the rubber component, and Wk represents a nitrogen adsorption specific surface area ($m^2/g$) of the silica k (k=0, 1, 2, ⋯ n, n represents an integer that is not less than 0).

## Patentansprüche

**1.** Luftreifen, umfassend eine Stahl-Breaker-Gummierung, die unter Verwendung einer Kautschukzusammensetzung hergestellt ist, wobei

kautschukphysikalische Eigenschaften der Kautschukzusammensetzung nach der Vulkanisation der Kautschukzusammensetzung dem nachstehend beschriebenen Ausdruck (1) genügen:

$$43000 < EB \times E^*/\tan\delta \qquad (1)$$

wobei in Ausdruck (1) $\tan\delta$ einen $\tan\delta$ darstellt, der durch bei 70°C, einer Frequenz von 10 Hz, einer anfänglichen Dehnung von 10% und einer dynamischen Dehnung von 2% durchgeführte Viskoelastizitätsmessung erhalten ist, wobei in Ausdruck (1) E* einen dynamischen Elastizitätsmodul (E* [MPa]) darstellt, der durch bei 70°C, einer Frequenz von 10 Hz, einer anfänglichen Dehnung von 10% und einer dynamischen Dehnung von 2% durchgeführte Viskoelastizitätsmessung erhalten ist, und wobei in Ausdruck (1) EB eine Zugdehnung (EB [%]) darstellt, die in Übereinstimmung mit JIS K6251 gemessen ist,
wobei die Kautschukzusammensetzung umfasst:

(1) eine Kautschukkomponente,
(2) ein kobalthaltiges Polymer der chemischen Formel (I), (II) oder (III) und
(3) eine kohlenwasserstoffgruppenhaltige zyklische Polyolverbindung und
(4) ein Verstärkungsmittel,

wobei das kobalthaltige Polymer der chemischen Formel (I)

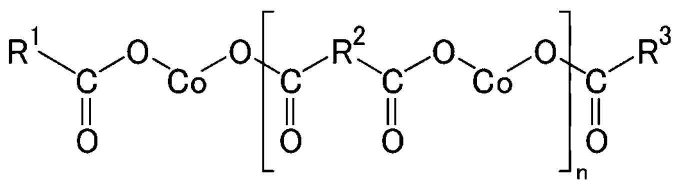

(I)

ist,
wobei in der chemischen Formel (I) $R^1$ und $R^3$ gleich oder voneinander verschieden sind, und jeweils eine lineare oder verzweigte C5- bis C36-Kohlenwasserstoffgruppe darstellen, $R^2$ eine lineare oder verzweigte C5-bis C36-Kohlenwasserstoffgruppe darstellt, n eine ganze Zahl darstellt, die nicht kleiner als 2 ist,
wobei das kobalthaltige Polymer der chemischen Formel (II)

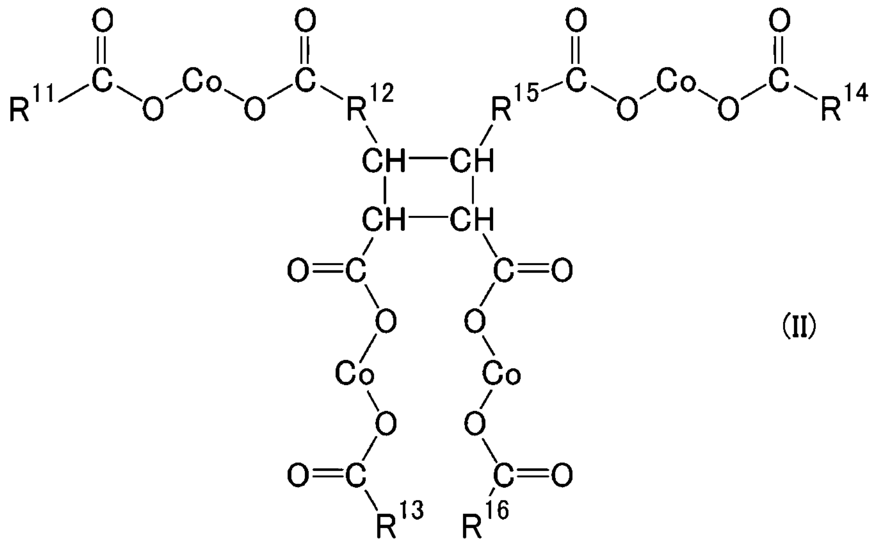

(II)

ist,
wobei in der chemischen Formel (II) $R^{11}$, $R^{13}$, $R^{14}$ und $R^{16}$ gleich oder voneinander verschieden sind, und jeweils eine lineare oder verzweigte C5-bis C36-Kohlenwasserstoffgruppe darstellen, $R^{12}$ und $R^{15}$ gleich oder voneinander verschieden sind, und jeweils eine lineare oder verzweigte C5-bis C36-Kohlenwasserstoffgruppe darstellen,
wobei das kobalthaltige Polymer der chemischen Formel (III)

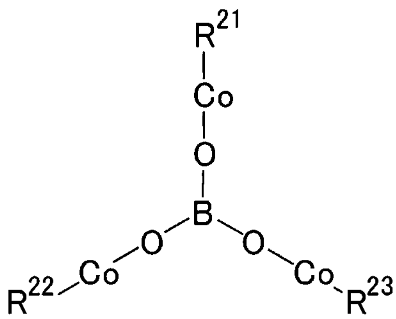

(III)

ist,
wobei in der chemischen Formel (III) $R^{21}$, $R^{22}$ und $R^{23}$ gleich oder voneinander verschieden sind, und jeweils eine durch die chemische Formel (IIIa) dargestellte Gruppe oder eine durch die chemische Formel (IIIb) dargestellte Gruppe darstellen,
wobei das kobalthaltige Polymer der chemischen Formel (IIIa)

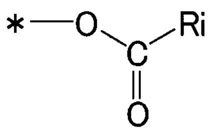

(IIIa)

ist,
wobei in der chemischen Formel (IIIa) Ri eine lineare oder verzweigte C5-bis C36-Kohlenwasserstoffgruppe darstellt, * eine Bindungseinheit darstellt, die an ein Kobaltatom bindet,
wobei das kobalthaltige Polymer der chemischen Formel (IIIb)

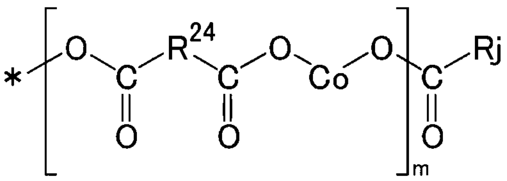

(IIIb)

ist,

wobei in der chemischen Formel (IIIb) Rj eine lineare oder verzweigte C5-bis C36-Kohlenwasserstoffgruppe darstellt, $R^{24}$ eine lineare oder verzweigte C5- bis C36-Kohlenwasserstoffgruppe darstellt, m eine ganze Zahl darstellt, die nicht kleiner als 2 ist, * eine Bindungseinheit darstellt, die an ein Kobaltatom bindet.

2. Luftreifen nach Anspruch 1, wobei das Verstärkungsmittel aus Ruß und/oder Siliziumdioxid ausgewählt ist.

3. Luftreifen nach Anspruch 2, wobei ein Gehalt des Rußes und/oder des Siliziumdioxids den nachstehend beschriebenen Ausdrücken (A) und (B) genügt:

[Mathematischer Ausdruck 1]

$$30 < \left(\sum X_j + \sum Z_k\right) < 80 \qquad (A)$$

$$0.2 < \left(\sum \frac{X_j}{Y_j} + \sum \frac{Z_k}{W_k}\right) < 1.2 \qquad (B)$$

wobei in Ausdruck (A) Xj einen Gehalt (Massenteile) an Ruß j bezogen auf 100 Massenteile einer Kautschukkomponente (j = 0, 1, 2, ⋯ m, m stellt eine ganze Zahl dar, die nicht kleiner als 0 ist) darstellt, und Zk einen Gehalt (Massenteile) an Siliziumdioxid k bezogen auf 100 Massenteile der Kautschukkomponente (k = 0, 1, 2, ⋯ n, n stellt eine ganze Zahl dar, die nicht kleiner als 0 ist) darstellt, und wobei in Ausdruck (B) Xj einen Gehalt (Massenteile) des Rußes j bezogen auf 100 Massenteile der Kautschukkomponente darstellt, und Yj eine spezifische Stickstoffadsorptionsoberfläche ($m^2/g$) des Rußes j (j = 0, 1, 2, ⋯ m, m stellt eine ganze Zahl dar, die nicht kleiner als 0 ist) darstellt, Zk einen Gehalt (Massenteile) des Siliziumdioxids k bezogen auf 100 Massenteile der Kautschukkomponente darstellt, und Wk eine spezifische Stickstoffadsorptionsoberfläche ($m^2/g$) des Siliziumdioxids k (k = 0, 1, 2, ⋯ n, n stellt eine ganze Zahl dar, die nicht kleiner als 0 ist), darstellt.

**Revendications**

1. Pneumatique comprenant du caoutchouc pour gommage de nappe sommet en acier produit en utilisant une composition de caoutchouc,

dans lequel les propriétés physiques de la composition de caoutchouc satisfont l’expression (1) décrite ci-dessous après vulcanisation de la composition de caoutchouc :

$$43\,000 < EB \times E^*/\tan\delta \qquad (1)$$

où, dans l’expression (1), tanδ représente la tanδ obtenue par mesure de viscoélasticité effectuée à 70 °C, une fréquence de 10 Hz, une contrainte initiale de 10 %, et une contrainte dynamique de 2 % et où, dans l’expression (1), E* représente un module élastique dynamique (E* [MPa]) obtenu par mesure de viscoélasticité effectuée à 70 °C, une fréquence de 10 Hz, une contrainte initiale de 10 %, et une contrainte dynamique de 2 % et où, dans l’expression (1), EB représente une élongation à la traction (EB [%]) mesurée en conformité avec la norme JIS

K6251,
dans lequel la composition de caoutchouc comprend :

(1) un composant de caoutchouc,
(2) un polymère contenant du cobalt de formule chimique (I), (II) ou (III) et
(3) un composé polyol cyclique contenant un groupe hydrocarbyle, et
(4) un agent de renforcement,

dans lequel le polymère contenant du cobalt de formule chimique (I) est

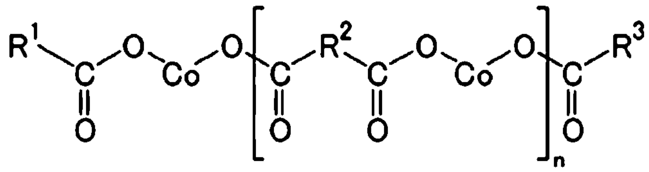

(I)

où, dans la formule chimique (1), $R^1$ et $R^3$ sont identiques ou différents l'un de l'autre, et chacun représente un groupe hydrocarbure en C5 à C36 linéaire ou ramifié, $R^2$ représente un groupe hydrocarbure en C5 à C36 linéaire ou ramifié, n représente un nombre entier qui est de pas moins de 2, dans lequel le polymère contenant du cobalt de formule chimique (II) est

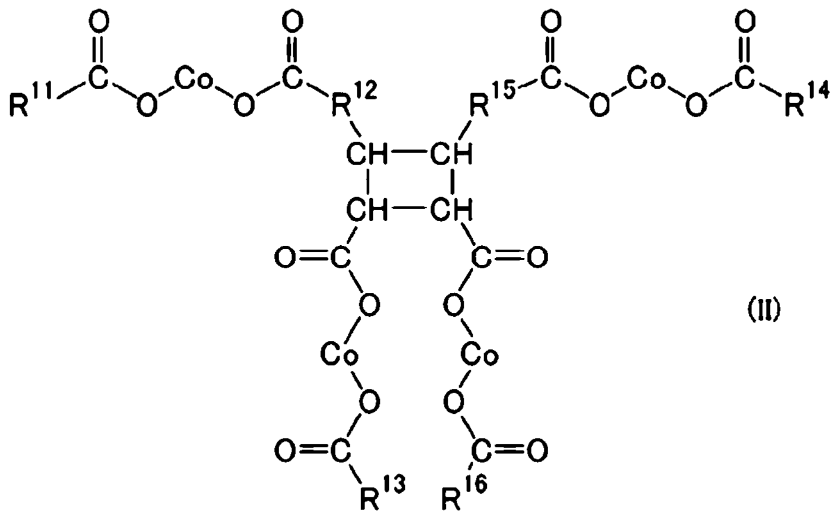

(II)

où, dans la formule chimique (II), $R^{11}$, $R^{13}$, $R^{14}$, et $R^{16}$ sont identiques ou différents les uns aux autres, et chacun représente un groupe hydrocarbure en C5 à C36 linéaire ou ramifié, $R^{12}$ et $R^{15}$ sont identiques ou différents l'un de l'autre et chacun représente un groupe hydrocarbure en C5 à C36 linéaire ou ramifié,
dans lequel le polymère contenant du cobalt de formule chimique (III) est

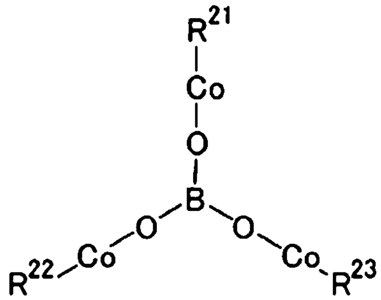

(III)

où, dans la formule chimique (III), $R^{21}$, $R^{22}$ et $R^{24}$ sont identiques ou différents les uns des autres, et chacun représente un groupe représenté par la formule chimique (IIIa) ou un groupe représenté par la formule chimique (IIIb),

dans lequel le polymère contenant du cobalt de formule chimique (IIIa) est

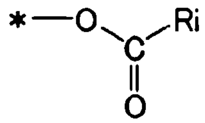

(IIIa)

où, dans la formule chimique (IIIa), Ri représente un groupe hydrocarbure en C5 à C36 linéaire ou ramifié, * représente une fraction de liaison qui se lie à un atome de cobalt,
dans lequel le polymère contenant du cobalt de formule chimique (IIIb) est

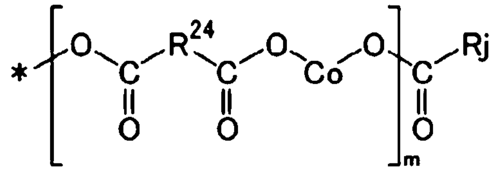

(IIIb)

où, dans la formule chimique (IIIb), Rj représente un groupe hydrocarbure en C5 à C36 linéaire ou ramifié, $R^{24}$ représente un groupe hydrocarbure en C5 à C36 linéaire ou ramifié, m représente un nombre entier qui est de pas moins de 2, * représente une fraction de liaison qui se lie à un atome de cobalt.

**2.** Pneumatique selon la revendication 1, dans lequel l'agent de renforcement est choisi parmi le noir de charbon et/ou la silice.

**3.** Pneumatique selon la revendication 2, dans lequel une teneur du noir de charbon et/ou de la silice satisfait les expressions (A) et (B) décrites ci-dessous

[Expression mathématique 1]

$$30 < \left(\sum X_j + \sum Z_k\right) < 80 \qquad (A)$$

$$0.2 < \left(\sum \frac{X_j}{Y_j} + \sum \frac{Z_k}{W_k}\right) < 1.2 \qquad (B)$$

où, dans l'expression (A), Xj représente une teneur (parties en masse) de noir de charbon j par rapport à 100 parties en masse d'un composant de caoutchouc (j = 0, 1, 2, m, m représente un nombre entier qui est de pas moins de 0) et Zk représente une teneur (parties en masse) de silice k par rapport à 100 parties en masse du composant de caoutchouc (k = 0, 1, 2, n, n représente un nombre entier qui est de pas moins de 0) et où, dans l'expression (B), Xj représente une teneur (parties en masse) du noir de charbon j par rapport à 100 parties en masse du composant de caoutchouc, et Yj représente une surface spécifique d'adsorption d'azote ($m^2/g$) du noir de charbon j (j = 0, 1, 2, m, m représente un nombre entier qui est de pas moins de 0), Zk représente une teneur (parties en masse) de la silice k par rapport à 100 parties en masse du composant de caoutchouc, et Wk représente une surface spécifique d'adsorption d'azote ($m^2/g$) de la silice k (k = 0, 1, 2, ⋯ n, n représente un nombre entier de pas moins de 0).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008101127 A
- JP 2009007454 A
- JP 2017178994 B
- JP 2010138359 A
- JP 2015124308 A
- JP 2003094918 A
- JP 2006273934 A
- JP 2004161862 A